(19) Europäisches Patentamt
European Patent Office
Office européen des brevets

(11) **EP 2 376 560 B1**

(12) **EUROPÄISCHE PATENTSCHRIFT**

(45) Veröffentlichungstag und Bekanntmachung des Hinweises auf die Patenterteilung:
**07.11.2012 Patentblatt 2012/45**

(51) Int Cl.:
**B01J 19/12** *(2006.01)*     **C08J 3/28** *(2006.01)*
**G01N 21/00** *(2006.01)*     **G01N 17/00** *(2006.01)*

(21) Anmeldenummer: **09797055.2**

(22) Anmeldetag: **29.12.2009**

(86) Internationale Anmeldenummer:
**PCT/EP2009/067976**

(87) Internationale Veröffentlichungsnummer:
**WO 2010/081630 (22.07.2010 Gazette 2010/29)**

(54) **SCHNELLBESTRAHLUNGSTEST FÜR GRANULATE**

RAPID IRRADIATION TEST FOR GRANULATES

ESSAI RAPIDE D'EXPOSITION DE GRANULÉS À UN RAYONNEMENT

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **13.01.2009 DE 102009000177**

(43) Veröffentlichungstag der Anmeldung:
**19.10.2011 Patentblatt 2011/42**

(73) Patentinhaber: **Evonik Degussa GmbH**
**45128 Essen (DE)**

(72) Erfinder:
• **CRUZ, Marisa**
**63538 Großkrotzenburg (DE)**
• **FUCHS, Rainer**
**63776 Mömbris (DE)**
• **KUHN, Frank Dieter**
**63571 Gelnhausen (DE)**

(56) Entgegenhaltungen:
**EP-A2- 1 947 444     WO-A1-00/13000**
**DE-A1- 2 816 548     DE-A1- 3 047 370**

**Beschreibung**

Die vorliegende Erfindung betrifft einen Schnellbestrahlungstest für Granulate, bevorzugt anorganische oder organische Granulate, besonders bevorzugt Kunststoffgranulate, sowie eine Vorrichtung für einen solchen Test.

**STAND DER TECHNIK**

Kunststoffgranulate sind eine typische Lieferform von thermoplastischen Kunststoffen der Rohstoffhersteller für die Kunststoff-verarbeitende Industrie. Sie sind wegen ihrer Rieselfähigkeit ein Schüttgut, wie Sand oder Kies, und damit vergleichsweise leicht zu transportieren und weiterzuverarbeiten.

Neuerdings wird die Verwendung von Kunststoffgranulaten als Füllmaterial für Kunstrasen intensiv diskutiert. Beispielsweise offenbart die europäische Patentanmeldung EP 1 416 009 A1 den Einsatz von ummantelten Gummipartikeln als Einstreumaterial oder als lose Elastikschicht für Kunstrasen oder andere Bodenbeläge. Die Gummipartikel sind in der Regel unregelmäßig, n-eckig geformt und haben vorzugsweise eine mittlere Größe zwischen 0,4 mm und 2,5 mm bis maximal 4,0 mm. Die einzelnen Gummipartikel sind über ihre komplette Oberfläche mit einem 5 $\mu$m bis 35 $\mu$m dicken Überzug versehen. Der Überzug bildet eine dauerelastische Ummantelung, die das Auswaschen von Schadstoffen, wie z. B. Zink weitgehend verhindern soll. Außerdem soll durch diese Verkapselung ein für Altgummi typischer Gummigeruch reduziert werden.

Für die Anwendung als Füllmaterial für Kunstrasen ist es jedoch wichtig zu erfahren, wie sich die Eigenschaften derartiger Kunststoffgranulate unter Sonnenbestrahlung mit der Zeit ändern (sogenanntes Altern der Kunststoffgranulate). Leider ist aber bis heute kein Test bekannt, durch den die Sonnenbestrahlung von Kunststoffgranulaten auf einfache Art und Weise, schnell und kostengünstig simuliert und eingeschätzt werden kann und der es ermöglicht, die Auswirkung der Bestrahlung auf die Kunststoffgranulate, insbesondere auf die Partikeloberflächen, innerhalb einer kurzen Zeit zu bestimmen.

Bekannt sind lediglich verschiedene Behandlungsverfahren zur Bestrahlung von Oberflächen von beschichteten oder unbeschichteten Blechen oder anderen zweidimensionalen Oberflächen oder beschichteten oder unbeschichteten Partikeln. Beispielsweise wird für die Testung der Wirkung von UV-Strahlen auf Automobil-Lacke häufig der Sun-Test eingesetzt, der weiterhin auch für partikuläre Systeme verwendet werden kann. Hier kommt ein Behälter zur Anwendung, in den die zu belichtenden beschichteten oder unbeschichteten Partikel eingestreut und dann belichtet werden.

Als ein weiteres Beispiel für die Bestrahlung von beschichteten oder unbeschichteten Partikeln wird von dem Institut ISA Sport zur Bewertung der Bewitterungsbeständigkeit von Füllmaterialien für Kunstrasen ein Gerät eingesetzt, welches nach dem Standard ISO 4892-3 arbeitet. Dabei wird ein beschichtetes oder unbeschichtetes Gummigranulat einer klimatischen Simulation unterworfen, bei der die Probe mit UV-Licht für eine Zeitdauer von 125 Tagen belastet wird.

Diese Tests weisen jedoch diverse Nachteile auf, die für eine schnelle Einschätzung des Einflusses einer Sonnenbestrahlung auf die Eigenschaften von Kunststoffgranulaten hinderlich sind:

- Die Tests sind langwierig und äußerst zeitintensiv, da sie in der Regel eine Bestrahlung von mehreren Monaten oder Jahren erfordern.
- Es gibt derzeit keinen Test, der es erlaubt, beschichtete oder unbeschichtete Partikel, wie z.B. Kunststoffgranulat, gleichmäßig auf der ganzen Oberfläche mit Belichtung und Bewitterung zu belasten. Das aber ist nötig, um ein möglichst einheitliches Verhalten der gesamten beschichteten oder unbeschichteten Partikel auf ihrer gesamten Oberfläche zu erreichen. Wegen der Belichtung nur einer Seite der beschichteten oder unbeschichteten Granulate resultieren zwei stark unterschiedliche Oberflächen, weshalb diverse weitergehende Analysen und Bestimmungen (z.B. Schadstoffeluation, Farbmessung) an den belichteten beschichteten oder unbeschichteten Granulaten nur schwer möglich sind.
- Einige der bisherigen Tests können nur wenig Material auf einmal behandeln; für die Durchführung von an die Bestrahlung anschließende Analysenmethoden (z.B. Farbmessung, Schadstoffeluation) ist es allerdings wichtig, dass genügend Mustermaterial zur Verfügung steht.
- Teilweise müssen Oberflächen hängend bestrahlt werden (z.B. im Xenontest). Dies kann mit Granulaten nur dann erfolgen, wenn diese an eine Oberfläche angeklebt werden, die dann hängend bestrahlt wird. In diesem Fall ist die Loslösung der Partikel äußerst aufwendig und der an den Partikeln verbleibende Kleber verfälscht die Ergebnisse nachfolgender Untersuchungen. Außerdem wird wieder nur eine Partikelseite bestrahlt.

ZUSAMMENFASSUNG DER ERFINDUNG

Es war somit Aufgabe der vorliegenden Erfindung, Möglichkeiten zur besseren Simulation des Einflusses von Sonnenstrahlen auf die Eigenschaften von Granulaten, insbesondere von Füllmaterialien für Kunstrasen, aufzuzeigen.

Bei der Entwicklung von Beschichtungen von Partikeln wäre es von großem Vorteil, möglichst schnell Resultate zu erhalten, die dazu verwendet werden können, um verschiedene Beschichtungen auf ihre Stabilität gegenüber UV-Bestrahlung zu testen und die besseren Beschichtungen auszuwählen.

Ganz besonders vorteilhaft wäre es, wenn die UV-Strahlung zur Anwendung kommen könnte, die auf der Erde auftrifft, also in der Regel UV-B und UV-A Strahlung mit einer Wellenlänge >295 nm. Ganz besonders vorteilhaft wäre es außerdem, wenn hauptsächlich die UV-B-Strahlung zur Testung ausgenutzt werden könnte, denn sehr viele Schädigungen an Beschichtungen resultieren aus einer Belastung durch UV-B Strahlung.

Weiterhin wurde nach einer Möglichkeit gesucht, eine möglich gleichmäßige Einwirkung auf die gesamte Oberfläche der Granulate zu erreichen.

Insbesondere wurde eine Lösung angestrebt, die

- eine schnelle Simulation des Einflusses von Sonnenstrahlen auf die Eigenschaften von Granulaten erlaubt,
- leicht realisier- und handhabbar ist,
- möglichst preiswert umgesetzt werden kann,
- möglichst universell anwendbar ist,
- möglichst geringe Mindestmustermengen erfordert, aber dennoch genügend Mustermengen an belichtetem Granulat für nachfolgende Untersuchungen bereitstellen kann,
- ggf. aber auch die Behandlung großer Mustermengen ermöglicht,
- möglichst selektiv ist, um auch bei sehr ähnlichen Granulaten noch eine Unterscheidung ihres Alterungsverhalten zuzulassen,
- nicht nur die Messung eines Punktes, sondern auch die Messung eines Verlaufes der Alterung über die Zeit ermöglicht; dadurch können weitere wichtige Hinweise über das Alterungsverhalten von Beschichtungen, Partikeln und insbesondere von Altreifengummigranulat gewonnen werden. Weiterhin könnte so auch der Einfluss der Art und der Menge einer den Granulaten enthaltenen Pigmentierung auf die Alterung ermittelt werden.

Gelöst werden diese sowie weitere Aufgaben, die sich aus den diskutierten Zusammenhängen ergeben, durch die Bereitstellung eines Verfahrens zur Bestrahlung von Granulaten mit allen Merkmalen des unabhängigen Verfahrensanspruchs. Besonders zweckmäßige Varianten des Verfahrens werden in den rückbezogenen Unteransprüchen beschrieben. Weiterhin wird eine für die Durchführung des erfindungsgemäßen Verfahrens besonders geeignete Vorrichtung unter Schutz gestellt.

Dadurch, dass man die Granulate in einem Probenbehälter anordnet und mit einer Bestrahlungslampe bestrahlt, wobei man die Granulate während der Bestrahlung periodisch durchmischt, so dass verschiedene Oberflächen der Granulate bestrahlt werden, gelingt es auf nicht ohne Weiteres vorhersehbare Weise, den Einfluss von Sonnenstrahlen auf die Eigenschaften von Granulaten, insbesondere von Füllmaterialien für Kunstrasen, besser zu simulieren.

Darüber hinaus ergeben sich durch die erfindungsgemäße Vorgehensweise zahlreiche weitere Vorteile:

- Das erfindungsgemäße Verfahren erlaubt die Untersuchung sowohl von beschichteten als auch von unbeschichteten Partikeln als auch von beschichteten oder unbeschichteten Partikelgemischen.
- Das erfindungsgemäße Verfahren ist äußerst schnell, sehr einfach durchführbar und hat nur einen sehr geringen Personal- und Zeitbedarf. Es ermöglicht insbesondere Rückschlüsse auf eine ggf. vorliegende Langzeit-UV-Schädigung infolge von Sonneneinstrahlung des bestrahlten beschichteten oder unbeschichteten Produktes durch die Verwendung einer hohen Strahlendosis während einer kurzen Bestrahlungszeit.
- Das erfindungsgemäße Verfahren ist sehr kostengünstig.
- Bzgl. der zu untersuchenden Probenmenge ist das erfindungsgemäße Verfahren sehr flexibel. Es können sowohl große Mengen als auch kleine Mengen an gealterten Granulaten erhalten werden, je nachdem wie viel Probenmaterial für die nachfolgenden Untersuchungen benötigt wird.
- Eine Testung ohne vorherige Fixierung der Granulate ist möglich.
- Beim erfindungsgemäßen Verfahren wird die gesamte Oberfläche der Granulate gleichmäßig belastet, hieraus resultiert eine wesentlich einfachere Bestimmung der Eigenschaften der gealterten Granulate.
- Durch die Anwendung des erfindungsgemäßen Verfahren können auch Granulate mit komplexer Struktur untersucht werden, die z.B. unregelmäßig beschichtet sind und/oder eine kantige oder andere komplexere, ggf. irreguläre oder kugelige Form aufweisen.

ABBILDUNG

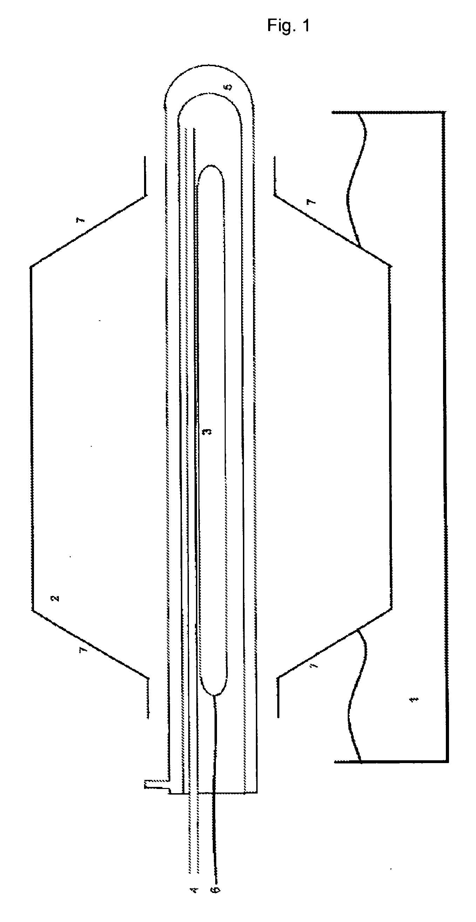

Die Abbildung Fig. 1 zeigt eine bevorzugte Ausführungsform einer Vorrichtung zur Bestrahlung von Granulaten.

Bezugszeichenliste:

| | |
|---|---|
| **1** | Temperierelement |
| **2** | Probenbehälter |
| **3** | Bestrahlungslampe |
| **4** | Inertgasspülung |
| **5** | Quenchraum |
| **7** | abgeschrägte Enden |

## DETAILLIERTE BESCHREIBUNG DER ERFINDUNG

Beim erfindungsgemäßen Verfahren zur Bestrahlung von Granulaten, zweckmäßigerweise von anorganischen oder organischen Granulaten, bevorzugt von Kunststoffgranulaten, besonders bevorzugt von beschichteten Kunststoffgranulaten, ordnet man die Granulate in einem Probenbehälter an und bestrahlt sie mit einer Bestrahlungslampe, wobei man die Granulate während der Bestrahlung periodisch durchmischt, so dass verschiedene Oberflächen der Granulate bestrahlt werden.

Der Begriff "periodisch" bezeichnet in diesem Zusammenhang eine in gleichen Abständen regelmäßig wiederkehrende Tätigkeit (hier die Durchmischung), wobei vorliegend eine Wiederholung von mindestens 2 Vorgängen, bevorzugt von mindestens 5 Vorgängen, insbesondere von mindestens 10 Vorgängen, bevorzugt wird.

Die Wiederholungsrate der Tätigkeit (hier die Durchmischung) ist vorzugsweise mindestens 1 Vorgang pro Minute, bevorzugt mindestens 5 Vorgänge pro Minute, insbesondere mindestens 10 Vorgänge pro Minute. Im Rahmen einer besonders bevorzugten Ausführungsform der vorliegenden Erfindung erfolgt während der Bestrahlung eine kontinuierliche Durchmischung.

Der Begriff "Durchmischung" bezeichnet im Rahmen der vorliegenden Erfindung eine gründliche Mischung der Granulate. Dies führt vorzugsweise zu einer Veränderung der dreidimensionalen Orientierung von mindestens zwei Granulaten, bevorzugt von mindestens 5 Granulaten, insbesondere von mindestens 10 Granulaten. Weiterhin werden vorzugsweise die Positionen von mindestens zwei Granulaten, bevorzugt von mindestens 5 Granulaten, insbesondere von mindestens 10 Granulaten, relativ zueinander verändert.

Im Rahmen einer besonders bevorzugten Ausführungsform der vorliegenden Erfindung werden die Granulate derart durchmischt, dass mindestens zwei verschiedene, vorzugsweise mindestens drei verschiedene, Oberflächen der Granulate nacheinander bestrahlt werden, wobei jede dieser Oberflächen mindestens zweimal, bevorzugt mindestens fünfmal, insbesondere mindestens 10 mal, bestrahlt wird.

Das erfindungsgemäße Bestrahlungsverfahren unterscheidet sich aufgrund der periodischen Durchmischung der Granulate während der Bestrahlung von den bekannten Bestrahlungsverfahren, bei welchen man die Granulate während der Bestrahlung nicht durchmischt und nur eine Oberfläche der Granulate kontinuierlich bestrahlt.

Das erfindungsgemäße Verfahren führt zu einer sehr gleichmäßigen Bestrahlung der gesamten Oberfläche der Granulate. Vorzugsweise erfolgt die Bestrahlung in einer Weise, dass der Unterschied zwischen der kürzesten Bestrahlungsdauer einer Oberfläche der Granulate und der längsten Bestrahlungsdauer einer Oberfläche der Granulate höchstens 100 %, bevorzugt höchstens 50 %, insbesondere höchstens 20 %, der längsten Bestrahlungsdauer einer Oberfläche der Granulate beträgt.

Durch die Bestrahlung wird der Einfluss von Licht, insbesondere von Sonnenlicht, auf die Granulate simuliert. Das Licht umfasst daher vorzugsweise Bestandteile des natürlichen Sonnenlichts; die Bestrahlung erfolgt vorzugsweise mit einer Wellenlänge im Bereich von 1 nm bis 1.000 nm, bevorzugt mit einer Wellenlänge im Bereich von 200 nm bis 400 nm (sogenannte Nahe UV-Strahlung), insbesondere mit einer Wellenlänge im Bereich von 295 nm bis 315 nm (sogenannte UV-B-Strahlung).

Für die Zwecke der vorliegenden Erfindung besonders vorteilhaft ist die Verwendung einer erfindungsgemäßen Vorrichtung zur Bestrahlung von Granulaten. Diese Vorrichtung umfasst

a. mindestens eine Bestrahlungslampe und
b. mindestens einen Probenbehälter für das zu bestrahlende Granulat,

wobei der Probenbehälter mit einem Antrieb verbunden ist, damit der Probenbehälter während der Bestrahlung bewegt und die Granulate durchmischt werden können.

Die Position der Bestrahlungslampe relativ zum Probenbehälter kann prinzipiell frei gewählt werden, wobei die Bestrahlungslampe vorzugsweise innerhalb des Proben behälters angeordnet ist. Sie kann jedoch auch außerhalb des Probenbehälters angeordnet sein, wenngleich diese Variante weniger bevorzugt wird.

Bevorzugt wird weiterhin eine direkte Einwirkung der Strahlen auf das zu bestrahlende Granulat. Materialien, die das Licht der Bestrahlungsquelle teilweise oder vollständig absorbieren oder umlenken können, sind daher nach Möglichkeit auf der Verbindungsgeraden zwischen der Bestrahlungslampe und dem Granulat zu vermeiden. Es sei denn, durch spezielle Materialien, wie z. B. Filter, wird eine gewünschte Verringerung von unerwünschter Strahlung, wie z. B. IR-Strahlung (Wärmestrahlung), erreicht, bei gleichzeitig möglichst guter Durchlässigkeit insbesondere für UV-B Strahlung.

Die Bestrahlungslampe ist vorzugsweise mit einer Inertgasspülung ummantelt, die vorzugsweise zwischen der Bestrahlungslampe und dem Probenbehälter angeordnet ist. Für die Zwecke der vorliegenden Erfindung besonders geeignete Inertgase umfassen insbesondere Stickstoff sowie alle Edelgase, wie Helium und Neon.

Im Rahmen einer besonders bevorzugten Ausführungsform der vorliegenden Erfindung ist weiterhin eine Spülung der Granulate im Probenraum mit mindestens einem Gas und/oder mindestens einer Flüssigkeit vorgesehen, um den Einfluss des Gases und/oder der Flüssigkeiten auf die Eigenschaften des Granulats während der Bestrahlung zu untersuchen. Für diese Zwecke besonders geeignet sind Luft, Wasserdampf, saurer Wasserdampf, saurer Regen und Wasser.

Weiterhin ist die Bestrahlungslampe vorzugsweise mit einem Filter versehen, der zumindest teilweise IR-Strahlung (780 nm bis 1 mm) aus dem Strahlungsspektrum der Bestrahlungslampe herausfiltert. Bevorzugt ist die Bestrahlungslampe zu diesem Zweck mit einem Quenchraum ummantelt, der eine IR-Quenchflüssigkeit umfasst und vorzugsweise zwischen der Bestrahlungslampe und dem Probenbehälter, besonders bevorzugt zwischen der Inertgasspülung und dem Probenbehälter angeordnet ist.

Für die Zwecke der vorliegenden Erfindung besonders geeignete IR-Quenchflüssigkeiten umfassen alle Flüssigkeiten, die bei den Untersuchungsbedingungen flüssig sind und die im Bereich von 780 nm bis 1 mm Licht zumindest teilweise absorbieren.

Durch die Verwendung eines IR-Filters wird ein Erwärmen der Granulate während der Bestrahlung weitgehend vermieden.

Die Form des Proben behälters unterliegt ebenfalls keinen besonderen Beschränkungen. Besonders bewährt haben sich jedoch Probenbehälter mit einem Bereich, der eine gerade zylindrischen Form umfasst, wobei die Bestrahlungslampe vorzugsweise zentriert in der Mitte des Zylinders angeordnet ist.

Im Rahmen einer besonders bevorzugten Ausführungsform der vorliegenden Erfindung hat die Bestrahlungslampe eine längliche Form, wobei die Ausrichtung der Bestrahlungslampe vorzugsweise der Hauptachse des Probenbehälters, insbesondere der Hauptachse eines geraden zylindrischen Teils des Probenbehälters, entspricht.

Die Innenwände des Probenbehälters umfassen vorzugsweise ein reflektierendes Material, um das Licht, welches z. B. die Granulate nicht getroffen oder passiert hat, nach Reflexion auf die Granulate zu leiten. Auf diese Weise lässt sich die Effektivität der Bestrahlung deutlich erhöhen. In diesem Zusammenhang besonders geeignete reflektierende Materialien führen zu einer Reflexion von mindestens 5 %, bevorzugt mindestens 25 %, besonders bevorzugt mindestens 50 %, der einfallenden Strahlung. Ein für diesen Zweck ganz besonders geeignetes Material ist Stahl.

Vorzugsweise sind mindestens 80 % der gesamten inneren Oberfläche des Probenbehälters mit dem reflektierenden Material beschichtet und/oder bestehen aus diesem.

Im Rahmen einer besonders bevorzugten Ausführungsform der vorliegenden Erfindung umfasst der Probenbehälter weiterhin ein Material mit einer hohen Wärmeleitfähigkeit, bevorzugt einer Wärmeleitfähigkeit größer 1 W / (m · K), insbesondere größer 3 W / (m · K), gemessen bei 25°C.

Vorzugsweise bestehen mindestens 80 % des Probenbehälters aus einem Material mit einer hohen Wärmeleitfähigkeit.

Zusätzlich umfasst die Vorrichtung der vorliegenden Erfindung vorzugsweise mindestens ein Temperierelement, bevorzugt ein Heiz- oder Kühlelement, insbesondere ein Kühlelement, das die Bestrahlung der Kunststoffpartikel bei fest vorgegebenen Temperaturbedingungen oder in fest vorgegebenen Temperaturbereichen erlaubt.

Der Probenbehälter umfasst ferner vorzugsweise mindestens ein Mischelement zum Vermischen der Granulate während der Bestrahlung. Besonders bewährt haben sich in diesem Zusammenhang Strömungsbrecher, die die Bewegung der Granulate bei einer Rotation des Behälters entlang seiner Hauptachse zumindest teilweise umlenken.

Zur Steigerung des Durchmischungseffekts der Granulate sind das Kopf- und/oder das Fußende, besonders bevorzugt das Kopf- und das Fußende, des Probenbehälters angeschrägt, um die Granulate während der Bestrahlung noch stärker zu durchmischen. Dabei nimmt der Innendurchmesser des Probenbehälters in Richtung des angeschrägten Endes vorzugsweise ab.

Die Größe des Probenbehälters ist von untergeordneter Bedeutung. Bevorzugt ist der Probenbehälter derart dimensioniert, dass er zwischen 10 g und 500 kg Granulate aufnehmen kann. Für die Zwecke der vorliegenden Erfindung ganz besonders geeignete Probenbehälter weisen ein Fassungsvolumen im Bereich von 1 kg bis 10 kg auf.

Während der Bestrahlung wird der Probenbehälter vorzugsweise zu 0,1 % bis 10 %, bevorzugt zu 0,5 % bis 5 %, bezogen auf das das Gesamtvolumen des Probenbehälters, mit Granulaten gefüllt.

Im Rahmen der vorliegenden Erfindung wird der Probenbehälter vorzugsweise gedreht, um die Durchmischung der Granulate zu erreichen. Die Drehung erfolgt dabei vorzugsweise um eine Hauptachse des Behälters, wobei die Bestrahlungslampe vorzugsweise ebenfalls entlang dieser Hauptachse positioniert ist.

Die Drehgeschwindigkeit ist vorzugsweise im Bereich von 1 UPM bis 500 UPM.

Der Aufbau einer für die Zwecke der vorliegenden Erfindung besonders geeigneten Bestrahlungsapparatur wird in Fig. 1 schematisch gezeigt. Sie umfasst eine Bestrahlungslampe (3) und einen Probenbehälter (2), wobei die Bestrahlungslampe (3) länglich ausgebildet und zentriert entlang der Hauptachse des Probenbehälters (2) angeordnet ist.

Der Probenbehälter (2) weist eine gerade zylindrische Form mit angeschrägten Kopf- und Fußenden (7) auf, wobei der Innendurchmesser des Probenbehälters (2) in Richtung der angeschrägten Enden (7) abnimmt.

Der Probenbehälter (2) ist vorzugsweise aus einem wärmeleitfähigen Stahl gefertigt, der mindestens 5 % der einfallenden Strahlung reflektiert.

Die Bestrahlungslampe ist mit einer Inertgasspülung (4) ummantelt, die zwischen der Bestrahlungslampe (3) und dem Probenbehälter (2) angeordnet ist.

Weiterhin ist die Bestrahlungslampe (3) mit einem Quenchraum (5) ummantelt, der eine IR-Quenchflüssigkeit umfasst und zwischen der Inertgasspülung (4) und dem Probenbehälter (2) angeordnet ist.

Die Vorrichtung umfasst ein Temperierelement (1), vorzugsweise ein Kühlwasserbad, zum Temperieren des Probenbehälters (2) im Laufe der Bestrahlung.

Während der Bestrahlung wird der Probenbehälter (2) mittels des Antriebs vorzugsweise kontinuierlich um die Hauptachse des Probenbehälters (2) gedreht, entlang der die Bestrahlungslampe (3) positioniert ist.

Die Temperatur während der Bestrahlung kann prinzipiell frei gewählt und insbesondere auf die Bedingungen abgestimmt werden, die simuliert oder nachgestellt werden sollen. Für die Zwecke der vorliegenden Erfindung liegt die Temperatur jedoch vorzugsweise im Bereich von 0°C bis 95°C.

Über die Zeitdauer der Bestrahlung und über die Bestrahlungsstärke lässt sich die Intensität der Bestrahlung der Granulate steuern. Bevorzugt erfolgt die Bestrahlung für eine Zeit im Bereich von 1 h bis 1.000 h, insbesondere im Bereich von 24 h bis 500 h. Weiterhin erfolgt die Bestrahlung der Granulate vorzugsweise mit einer Bestrahlungsstärke im UV-B Bereich im Bereich von 1 W/m$^2$ bis 10.000 W/m$^2$, insbesondere im Bereich von 100 W/m$^2$ bis 1.000 W/m$^2$.

Das erfindungsgemäße Schnellbestrahlungsverfahren sowie die erfindungsgemäße Vorrichtung zur Bestrahlung von Granulaten eignen sich grundsätzlich für die Bestrahlung von allen Arten von Granulaten. Besonders bevorzugt werden sie jedoch für die Bestrahlung von beschichteten Kunststoffgranulaten, insbesondere von ummantelten Gummipartikeln, verwendet, die u. a. als Einstreumaterial oder als lose Elastikschicht für Kunstrasen oder andere Bodenbeläge eingesetzt werden.

Die Gummipartikel sind in der Regel unregelmäßig, n-eckig geformt und haben vorzugsweise eine mittlere Größe zwischen 0,4 mm und 4,0 mm. Die maximale Teilchengröße der Partikel ist vorzugsweise kleiner 10 mm, besonders bevorzugt kleiner 7 mm. Die minimale Teilchengröße der Partikel ist vorzugsweise größer 0,1 mm, besonders bevorzugt größer 0,2 mm. Die einzelnen Gummipartikel sind vorzugsweise mit einem 5 $\mu$m bis 35 $\mu$m dicken Überzug versehen. Der Überzug bildet vorzugsweise eine dauerelastische Ummantelung, die das Auswaschen von Schadstoffen, wie z. B. Zink weitgehend verhindern soll. Außerdem soll durch diese Verkapselung ein für Altgummi typischer Gummigeruch reduziert werden. Weitere Details zu derartigen Kunststoffgranulaten können beispielsweise der europäischen Patentanmeldung EP 1 416 009 A1 entnommen werden.

Der erfindungsgemäße Verfahren kann ferner auch genutzt werden, um den Einfluss von Sonnenstrahlen auf die Anbindung eines Materialverbunds zu studieren. Zu diesem Zweck untersucht man vorzugsweise Partikel, die aus dem Materialverbund gewonnen wurden und die vorzugsweise aus dem Materialverbund geschnitten, gestanzt oder gebrochen wurden.

Nachfolgend wird die Erfindung durch mehrere Beispiele weiter veranschaulicht, ohne dass hierdurch eine Beschränkung des Erfindungsgedankens erfolgen soll.

Beispiele

Zur Bestrahlung wurde eine Vorrichtung mit einem schematischen Aufbau gemäß Fig. 1 verwendet. In einem zylindrischen VA-Trommelreaktor mit ca. 12 Litern Rauminhalt (Länge: 19,6 cm; Durchmesser: 27,4 cm; bestrahlte Fläche: 1687 cm$^2$) mit Strömungsbrechern und Wasserkühlung wurde in der Rotationsachse ein Borosilikatglasrohr mit Wasserkühlung und Stickstoffspülung sowie im Borosilikatglasrohr ein eisendotierter Hg-Mitteldruckstrahler mit 150 mm Leuchtlänge mit 1,8 kW Maximalleistung positioniert, der durch ein geeignetes elektronisches Vorschaltgerät betrieben werden konnte.

In einem Becherglas wurden 100 g der zu bestrahlenden beschichteten oder unbeschichteten Probe eingewogen und in den Reaktor gefüllt. Danach baute man das Tauchrohr mit dem UV-Strahler in die dafür vorgesehene Halterung der Anlage ein. Der Stickstoffstrom wurde auf 6 L/h, der Kühlwasserstrom auf 100 L/h eingestellt. Dann wurde die UV-Belastungsanlage eingeschaltet und der Motor gestartet, der für die Reaktordrehung (12 UPM) sorgte.

Nun wurde die zu untersuchende beschichtete oder unbeschichtete Probe 240 Stunden bei 1,55 kW Strahlerleistung (Wellenlänge der die Probe belastenden Strahlung im UV-Bereich: 295-380 nm) unter Rotation bestrahlt.

Nach abgeschlossener Bestrahlung wurde die Anlage abgeschaltet und die bestrahlte beschichtete oder unbeschichtete Probe quantitativ aus dem Reaktor entnommen.

Die Probe wurde nachfolgenden Tests unterzogen, um die Wirkung der UV-Bestrahlung zu untersuchen.

Der beschriebene UV-Test war in seiner Intensität im UVB-Bereich ungefähr 360-fach stärker als das natürliche Sonnenlicht im Sommer zur Mittagszeit in Deutschland durch 24-stündige Dauerbestrahlung. Bei einer Strahlerleistung von 1,55 kW entfielen auf den UVA und UVB Bereich folgende Leistungen:

$$UVB\ (295 - 315\ nm)\ =\ 74\ W$$

$$UVA\ (315 - 380\ nm)\ =\ 325\ W;$$

Aus den Trommel-Abmessungen ergab sich eine bestrahlte Fläche von 1.687 cm$^2$, das bedeutete eine Bestrahlungsstärke für den UVB-Bereich von 439 W/m$^2$.

Zur Gewinnung der Ergebnisse wurde wie folgt verfahren:

Zunächst wurde vom unbestrahlten Produkt die Farbe, der Abrieb oder die Zinkeluation gemessen. Dann wurde jeweils ein Muster eines Produktes der UV-Bestrahlung in der UV-Bestrahlungsapparatur unterzogen, das bestrahlte Produkt aus der Apparatur möglichst quantitativ entnommen und jeweils einem weiteren Test oder allen Tests unterworfen: entweder Zinkeluation, oder Farbmessung oder Abrieb oder allen angegebenen Tests.

Die Differenz der [Werte der Untersuchung nach UV-Bestrahlung] minus [Werte der Untersuchung vor UV-Bestrahlung] ergibt einen Delta-Wert, dessen Höhe und Vorzeichen die Auswirkung der UV-Bestrahlung auf das getestete Material beschreibt.

| UV-eluierbare Stoffe, wie z.B. Zn | | | |
|---|---|---|---|
| **Bezeichnung** | **unbehandelte Muster** | **Nach UV** | $\Delta_{Zn}$ **(mg/L)** |
| | **Zink (mg/L)** | **Zink (mg/L)** | |
| GTR | 5,0 | 5,4 | 0,4 |
| Granufill (CGTR) | 3,6 | 5,4 | 1,8 |
| Evonik 1 | 0,3 | 1,3 | 1,0 |
| Evonik 2 | 0,8 | 2,6 | 1,8 |
| Evonik 3 | 0,5 | 2,4 | 1,9 |

Der Zink-Gehalt wurde nach Vomorm DIN V 18035-7, 6.11.3 (Sportplätze, Teil 7: Kunststoffrasenflächen) bestimmt. GTR: ground tire rubber, Gummigranulat fein der Firma Genan Gruppen GmbH

| UV-Abrieb | | | |
|---|---|---|---|
| **Bezeichnung** | **unbehandelte Muster** | **Nach UV** | $\Delta_{Abrieb}$ |
| | **Abrieb (%)** | **Abrieb (%)** | |
| RTW GO 2008 RAL 6025 (CGTR) | 6,0 | 7,37 | 1,37 |
| Granufill (CGTR) | 2,84 | 2,51 | -0,33 |
| GTR | 1,25 | 1,6 | 0,35 |
| Evonik 1 | 1,50 | 1,80 | 0,30 |
| Evonik 2 | 1,40 | 1,90 | 0,50 |

(fortgesetzt)

| Bezeichnung | unbehandelte Muster | Nach UV | $\Delta_{Abrieb}$ |
|---|---|---|---|
| | Abrieb (%) | Abrieb (%) | |
| Evonik 3 | 1,10 | 2,50 | 1,40 |

CGTR: coated GTR

| | UV-Farbe | | | | | | |
|---|---|---|---|---|---|---|---|
| Bezeichnung | unbehandelte Muster | | | Nach UV | | | $\Delta E^*ab$ |
| | L | a | b | L | a | b | |
| MRH-grün SOCC (CGTR) | 18,95 | -8,68 | 8,07 | 14,81 | -6,01 | 8,24 | 4,93 |
| RTW GO 2008 RAL 6025 (CGTR) | 29,90 | -7,88 | 14,18 | 22,19 | -4,36 | 8,78 | 10,06 |
| Granufill (CGTR) | 18,20 | -12,79 | 9,80 | 15,74 | -7,54 | 7,37 | 6,29 |
| Evonik 1 | 36,96 | -5,31 | 2,25 | 36,00 | -3,66 | 2,03 | 1,92 |
| Evonik 2 | 40,88 | -7,22 | 6,70 | 39,42 | -5,40 | 5,82 | 2,49 |
| Evonik 3 | 38,26 | -6,08 | 3,55 | 36,26 | -3,48 | 2,59 | 3,42 |

Die Farbmessung wurde in Anlehnung an DIN 5033 bestimmt.

**Patentansprüche**

1. Vorrichtung zur Bestrahlung von Granulaten, umfassend

    a. mindestens eine Bestrahlungslampe (3) und
    b. mindestens einen Probenbehälter (2) für das zu bestrahlende Granulat,

    **dadurch gekennzeichnet, dass** der Probenbehälter mit einem Antrieb verbunden ist, damit der Probenbehälter während der Bestrahlung bewegt und die Granulate durchmischt werden können.

2. Vorrichtung nach Anspruch 1, **dadurch gekennzeichnet, dass** die Bestrahlungslampe (3) innerhalb des Probenbehälters (2) angeordnet ist.

3. Vorrichtung nach Anspruch 2, **dadurch gekennzeichnet, dass** der Probenbehälter (2) einen Bereich mit einer geraden zylindrischen Form umfasst, wobei die Bestrahlungslampe (3) zentriert in der Mitte des Zylinders angeordnet ist.

4. Vorrichtung nach Anspruch 2 oder 3, **dadurch gekennzeichnet, dass** die Innenwände des Probenbehälters (2) ein reflektierendes Material umfassen.

5. Vorrichtung nach Anspruch 2, 3 oder 4, **dadurch gekennzeichnet, dass** der Probenbehälter (2) ein Material mit einer Wärmeleitfähigkeit größer 1 W / (m · K), gemessen bei 25°C, umfasst.

6. Vorrichtung nach Anspruch 5, **dadurch gekennzeichnet, dass** die Vorrichtung weiterhin mindestens ein Temperierelement (1) umfasst.

7. Vorrichtung nach mindestens einem der vorliegenden Ansprüche, **dadurch gekennzeichnet, dass** der Probenbehälter (2) mindestens ein Mischelement zum Vermischen der Granulate während der Bestrahlung umfasst.

8. Vorrichtung nach mindestens einem der vorliegenden Ansprüche, **dadurch gekennzeichnet, dass** das Kopf- und/ oder das Fußende (7) des Probenbehälters (2) angeschrägt sind, um die Granulate während der Bestrahlung zu vermischen.

9. Verfahren zur Bestrahlung von Granulaten, bei welchem man die Granulate in einem Probenbehälter (2) anordnet und mit einer Bestrahlungslampe (3) bestrahlt, **dadurch gekennzeichnet, dass** man die Granulate während der Bestrahlung periodisch durchmischt, so dass verschiedene Oberflächen der Granulate bestrahlt werden.

10. Verfahren nach Anspruch 9, **dadurch gekennzeichnet, dass** man die Granulate derart durchmischt, dass mindestens zwei verschiedene Oberflächen der Granulate nacheinander bestrahlt werden, wobei jede dieser Oberflächen mindestens zweimal bestrahlt wird.

11. Verfahren nach Anspruch 9 oder 10, **dadurch gekennzeichnet, dass** man die Granulate mit einem Licht mit einer Wellenlänge im Bereich von 1 nm bis 1.000 nm bestrahlt.

12. Verfahren nach Anspruch 9, 10 oder 11, **dadurch gekennzeichnet, dass** man die Granulate unter Verwendung einer Vorrichtung gemäß mindestens einem der Ansprüche 1 bis 9 bestrahlt.

13. Verfahren nach Anspruch 12, **dadurch gekennzeichnet, dass** man den Probenbehälter mit einer Geschwindigkeit im Bereich von 1 UPM bis 500 UPM periodisch dreht.

14. Verfahren nach mindestens einem der Ansprüche 9 bis 13, **dadurch gekennzeichnet, dass** man die Bestrahlung bei einer Temperatur im Bereich von 0°C bis 95°C durchführt.

15. Verfahren nach mindestens einem der Ansprüche 9 bis 14, **dadurch gekennzeichnet, dass** die Bestrahlung für eine Zeit im Bereich von 1 h bis 1.000 h erfolgt.

16. Verfahren nach mindestens einem der Ansprüche 9 bis 15, **dadurch gekennzeichnet, dass** die Bestrahlung mit einem Licht mit einer Bestrahlungsstärke im Bereich von 1 W/m$^2$ bis 10.000 W/m$^2$ erfolgt.

17. Verfahren nach mindestens einem der Ansprüche 9 bis 16, **dadurch gekennzeichnet, dass** man ummantelte Gummipartikel bestrahlt.

18. Verfahren nach mindestens einem der Ansprüche 9 bis 17, **dadurch gekennzeichnet, dass** man Partikel untersucht, die aus einem Materialverbund gewonnen wurden.

**Claims**

1. Device for irradiating granules, comprising

   a. at least one irradiation lamp (3), and
   b. at least one sample container (2) for the granules to be irradiated, **characterized in that**

   the sample container is connected to a drive so that the sample container can be moved during the irradiation and the granules can be mixed.

2. Device according to Claim 1, **characterized in that** the irradiation lamp (3) is arranged inside the sample container (2).

3. Device according to Claim 2, **characterized in that** the sample container (2) comprises a region of a straight cylindrical shape, the irradiation lamp (3) being arranged centred in the middle of the cylinder.

4. Device according to Claim 2 or 3, **characterized in that** the inner walls of the sample container (2) comprise a reflecting material.

5. Device according to Claim 2, 3 or 4, **characterized in that** the sample container (2) comprises a material with a thermal conductivity of greater than 1 W/(m · K), measured at 25°C.

6. Device according to Claim 5, **characterized in that** the device further comprises at least one temperature control element (1).

7. Device according to at least one of the preceding claims, **characterized in that** the sample container (2) comprises at least one mixing element for mixing the granules during the irradiation.

8. Device according to at least one of the present claims, **characterized in that** the head and/or the foot end (7) of the sample container (2) is bevelled in order to mix the granules during the irradiation.

9. Method for irradiating granules, in the case of which the granules are arranged in a sample container (2) and are irradiated with an irradiation lamp (3), **characterized in that** the granules are periodically mixed during the irradiation such that different surfaces of the granules are irradiated.

10. Method according to Claim 9, **characterized in that** the granules are mixed in such a way that at least two different surfaces of the granules are consecutively irradiated, each of these surfaces being irradiated at least twice.

11. Method according to Claim 9 or 10, **characterized in that** the granules are irradiated with light with a wavelength in the range from 1 nm to 1000 nm.

12. Method according to Claims 9, 10 or 11, **characterized in that** the granules are irradiated by using a device in accordance with at least one of Claims 1 to 9.

13. Method according to Claim 12, **characterized in that** the sample container is rotated periodically with a rate in the range from 1 RPM to 500 RPM.

14. Method according to at least one of Claims 9 to 13, **characterized in that** the irradiation is carried out at a temperature in the range from 0°C to 95°C.

15. Method according to at least one of Claims 9 to 14, **characterized in that** the irradiation is performed for a time in the range from 1 h to 1000 h.

16. Method according to at least one of Claims 9 to 15, **characterized in that** the irradiation is performed by using light with an irradiance in the range from 1 W/m$^2$ to 10 000 W/m$^2$.

17. Method according to at least one of Claims 9 to 16, **characterized in that** the coated rubber particles are irradiated.

18. Method according to at least one of Claims 9 to 17, **characterized in that** particles are examined which have been obtained from a composite material.

**Revendications**

1. Dispositif destiné à l'irradiation de granulés, comprenant

    a. au moins une lampe d'irradiation (3) et
    b. au moins un récipient à échantillon (2) pour le granulé à irradier, **caractérisé en ce que** le récipient à échantillon est raccordé à un système d'entraînement par lequel le récipient à échantillon est mis en mouvement pendant l'irradiation et les granulés peuvent être intimement mélangés.

2. Dispositif selon la revendication 1, **caractérisé en ce que** la lampe d'irradiation (3) est placée à l'intérieur du récipient à échantillon (2).

3. Dispositif selon la revendication 2, **caractérisé en ce que** le récipient à échantillon (2) comprend une zone ayant une forme de cylindre droit, la lampe d'irradiation (3) étant placée au centre au milieu du cylindre.

4. Dispositif selon la revendication 2 ou 3, **caractérisé en ce que** les parois internes du récipient à échantillon (2) comprennent un matériau réfléchissant.

5. Dispositif selon la revendication 2, 3 ou 4, **caractérisé en ce que** le récipient à échantillon (2) comprend un matériau ayant une conductivité thermique supérieure à 1 W/(m · K), mesurée à 25 °C.

6. Dispositif selon la revendication 5, **caractérisé en ce que** le dispositif comprend au moins un élément pour le maintien de la température (1).

7. Dispositif selon au moins l'une quelconque des revendications précédentes, **caractérisé en ce que** le récipient à échantillon (2) comprend au moins un élément mélangeur pour le mélange des granulés pendant l'irradiation.

8. Dispositif selon au moins l'une quelconque des revendications précédentes, **caractérisé en ce que** l'extrémité avant et/ou l'extrémité arrière (7) du récipient à échantillon (2) est/sont en biseau, afin de mélanger les granulés pendant l'irradiation.

9. Procédé pour l'irradiation de granulés, dans lequel on place les granulés dans un récipient à échantillon (2) et on les irradie avec une lampe d'irradiation (3), **caractérisé en ce que** périodiquement pendant l'irradiation on mélange intimement les granulés, de sorte que différentes surfaces des granulés sont irradiées.

10. Procédé selon la revendication 9, **caractérisé en ce qu'**on mélange intimement les granulés, de sorte qu'au moins deux surfaces différentes des granulés sont irradiées successivement, chacune de ces deux surfaces étant irradiée au moins deux fois.

11. Procédé selon la revendication 9 ou 10, **caractérisé en ce qu'**on irradie les granulés avec une lumière ayant une longueur d'onde dans la gamme de 1 nm à 1 000 nm.

12. Procédé selon la revendication 9, 10 ou 11, **caractérisé en ce qu'**on irradie les granulés en utilisant un dispositif selon au moins l'une quelconque des revendications 1 à 9.

13. Procédé selon la revendication 12, caractérisé e n c e que le récipient à échantillon tourne périodiquement à une vitesse dans la plage de 1 tour/min à 500 tours/min.

14. Procédé selon au moins l'une quelconque des revendications 9 à 13, **caractérisé en ce qu'**on effectue l'irradiation à une température dans la plage de 0 °C à 95 °C.

15. Procédé selon au moins l'une quelconque des revendications 9 à 14, **caractérisé en ce que** l'irradiation s'effectue pendant une durée dans la plage de 1 h à 1 000 h.

16. Procédé selon au moins l'une quelconque des revendications 9 à 15, **caractérisé en ce que** l'irradiation s'effectue avec une lumière ayant une intensité d'irradiation dans la plage de 1 W/m$^2$ à 10 000 W/m$^2$.

17. Procédé selon au moins l'une quelconque des revendications 9 à 16, **caractérisé en ce qu'**on irradie des particules de caoutchouc vulcanisé non enrobées.

18. Procédé selon au moins l'une quelconque des revendications 9 à 17, **caractérisé en ce qu'**on analyse des particules qui ont été obtenues à partir d'un composite de matériaux.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1416009 A1